(19) **Europäisches Patentamt**
**European Patent Office**
**Office européen des brevets**

(11) **EP 2 103 013 B1**

(12) **EUROPEAN PATENT SPECIFICATION**

(45) Date of publication and mention
of the grant of the patent:
**23.11.2016 Bulletin 2016/47**

(51) Int Cl.:
***G08C 17/02*** (2006.01)        ***H04B 1/713*** (2011.01)
***H04W 88/06*** (2009.01)

(21) Application number: **08727465.0**

(22) Date of filing: **09.01.2008**

(86) International application number:
**PCT/US2008/050607**

(87) International publication number:
**WO 2008/086408 (17.07.2008 Gazette 2008/29)**

(54) **RADIO TRANSCEIVER AND METHOD THEREOF**

FUNKEMPFÄNGER UND ENTSPRECHENDES VERFAHREN

ÉMETTEUR-RÉCEPTEUR RADIO ET PROCÉDÉ ASSOCIÉ

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **09.01.2007 US 884171 P**

(43) Date of publication of application:
**23.09.2009 Bulletin 2009/39**

(73) Proprietor: **City Theatrical Inc
Carlstadt, NJ 07072 (US)**

(72) Inventors:
• **FAILS, Gary
Tappan, New York 10983 (US)**
• **DUNN, Lauren, E.
New York, NY 10010 (US)**

• **KLEISSLER, Paul
Englewood, New Jersey 07631 (US)**

(74) Representative: **Hafner, Dieter et al
Hafner & Partner
Patent-/Rechtsanwaltskanzlei
Schleiermacherstrasse 25
90491 Nürnberg (DE)**

(56) References cited:
**EP-A1- 1 187 414        WO-A2-2006/012239
US-A- 5 838 730          US-A1- 2001 050 943
US-A1- 2002 150 147      US-A1- 2004 085 941
US-B1- 6 463 090         US-B1- 7 054 301
US-B2- 7 145 934**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## BACKGROUND OF THE INVENTION

Field of the Invention

Embodiments of the present invention generally relate to a wireless control system and method thereof. More specifically, embodiments of the present invention relate to wireless radio transceiver control devices for use in entertainment technology applications, and methods of controlling entertainment fixtures utilizing same.

Description of the Related Art

Entertainment control systems used in entertainment applications (e.g., stage shows, Broadway productions, sporting events, theme parks, etc.) traditionally comprise complex computer-controlled systems utilizing a wide range of stationary and moving lighting and effect devices, otherwise known as fixtures. Known fixtures include, but are not limited to, luminaries, dimmers, stepper motors, fog/ smoke generators, and the like.

Conventional systems utilize control cables between control devices and one or more fixtures. However, installation of control cables is difficult, time consuming and thus, expensive. Additionally, control cables to not allow for easy connectivity, configuration and often control of individual fixtures, particularly when such connectivity or configuration needs to be modified during a live performance.

Attempted solutions to wirelessly control such systems have been introduced to the market, utilizing known wireless communication technologies to transmit data between devices. However, many of these attempted solutions fail to account for the existence of the other wireless devices (e.g., computer networks, mobile telephones, walkie-talkies, etc.) also communicating via known wireless communication technologies, and thus, causing interference in the system.

WO2006/012239 A2 discloses methods and apparatus for controlling devices used in entertainment lighting applications and, in particular, a transceiver adapted for incorporation in controllers and controlled devices utilizing industry- standard wired control protocols (e.g., DMX512, RDM, or ACN protocol). The transceiver uses wireless broadcasting transmission techniques (e.g., IEEE 802.11 Ethernet Frequency Hopping Spread Spectrum (FHSS) and Direct Sequence Spread Spectrum (DSSS)) and facilitates a bi-directional wireless interface between a controller and controlled devices of a lighting system.

EP 1 187 414 A1 discloses a data transmission method and data transmission apparatus. Data are transmitted bi-directionally between two devices and if a side receives a command, it executes an action instructed by the command. The used protocol is Bluetooth.

US 2004/0085941 A1 discloses an information appliance control system that also uses the Bluetooth standard.

US 2001/0050943 A1 teaches a radio frequency communication network. The network includes a multiplicity of mobile transceiver units selectively in communication with a plurality of base transceiver units, which communicate with one or two host computers for storage and manipulation of data collected by barcode scanners or other collection means associated with the mobile transceiver units.

Therefore, an improved entertainment control system, device and method, accounting for such potential interferences, is needed in the industry.

## SUMMARY OF THE INVENTION

Embodiments of the present invention generally relate to a wireless control system and method thereof. More specifically, embodiments of the present invention relate to wireless radio transceiver control devices for use in entertainment technology applications, and methods of controlling entertainment fixtures utilizing same.

In one embodiment, a radio transceiver system comprises a control system, a first radio transceiver for transmitting control data formatted in at least an industry-standard control protocol from the control system to at least a second radio transceiver, a second radio transceiver for receiving control data from the first radio transceiver and communicating the same to at least a load, wherein the control data is transmitted from the first radio transceiver to the second radio transceiver utilizing an frequency hopping spread spectrum broadcast, wherein the industry-standard control protocol comprises at least one from the group consisting of DMX512, RDM and ACN.

In yet another embodiment, a method of transmitting data within a control system comprises initiating a hopping signal from a first transceiver having a constant timing period, transmitting control data from a control system to the first transceiver upon initiation of the hopping signal, transmitting the control data from the first transceiver to a second transceiver on a first frequency, and retransmitting the control data from the first transceiver to the second transceiver on a second frequency.

It is of further advantage, if the method of transmitting data within an entertainment control system comprises that a hopping sequence for the frequency hopping spread spectrum broadcast is calculated using a function of at least a sequency number and a position in a particular sequence. It may further of advantage, if the second transceiver follows a hopping sequence identical to the hopping sequence of the first transceiver and/or the control data is between about 39 and about 552 bytes and/or the constant timing period of the hopping signal is between about 22.0 mS. and about 23.0 mS, wherein the control data is formatted in at least an industry-standard control protocol comprising at least one from the group consisting of DMX512, RDM and ACN.

It may be further of advantage that the method comprises performing a cyclic redundancy check on the control data received from the transmission to ensure error-free transmission of the data.

## BRIEF DESCRIPTION OF THE DRAWINGS

So the manner in which the above recited features of the present invention can be understood in detail, a more particular description of embodiments of the present invention, briefly summarized above, may be had by reference to embodiments, which are illustrated in the appended drawings. It is to be noted, however, the appended drawings illustrate only typical embodiments of embodiments encompassed within the scope of the present invention, and, therefore, are not to be considered limiting, for the present invention may admit to other equally effective embodiments, wherein:

Figure 1 depicts a radio transceiver system in accordance with one embodiments of the present invention;

Figure 2 depicts a block diagram of a radio transceiver in accordance with one embodiment of the present invention;

Figure 3 depicts a timing diagram at a transmitter, representing the data transmission through the transmitter, in accordance with one exemplary embodiment of the present invention;

Figure 4 depicts a timing diagram at a receiver, representing the data transmission to a receiver from a transmitter, in accordance with one exemplary embodiment of the present invention;

Figure 5 depicts a timing diagram at a transmitter, representing the data transmission through the transmitter, in accordance with one exemplary embodiment of the present invention;

Figure 6 depicts a timing diagram at a receiver, representing the data transmission to a receiver from a transmitter, in accordance with one exemplary embodiment of the present invention; and

Figure 7 generally depicts the structure of a data packet, in accordance with embodiments of the present invention.

The headings used herein are for organizational purposes only and are not meant to be used to limit the scope of the description or the claims. As used throughout this application, the word "may" is used in a permissive sense (i.e., meaning having the potential to), rather than the mandatory sense (i.e., meaning must). Similarly, the words "include", "including", and "includes" mean including but not limited to. To facilitate understanding, like reference numerals have been used, where possible, to designate like elements common to the figures.

## DETAILED DESCRIPTION

Embodiments of the present invention generally relate to a radio transceiver system and method thereof. More specifically, embodiments of the present invention relate to wireless radio transceiver control devices for use in the entertainment industry, and methods of controlling entertainment fixtures utilizing same.

Embodiments of the present invention are intended to be compatible with existing Wireless Data System™ (WDS) components, commercially available from City Theatrical, Inc. of Carlstadt, NJ, to alleviate the need to replace an entire control system. Exemplary WDS components are disclosed in United States Patent Application Serial No. 11/109,013, filed April 18, 2005, entitled "Wireless Control System and Method Thereof," published as United States Patent Application Publication No. 2005/0286646. In this regard, embodiments of the present invention may be plug-compatible with Aerocomm 5124 and Aerocomm-equivalent commands, to accomodate older entertainment systems.

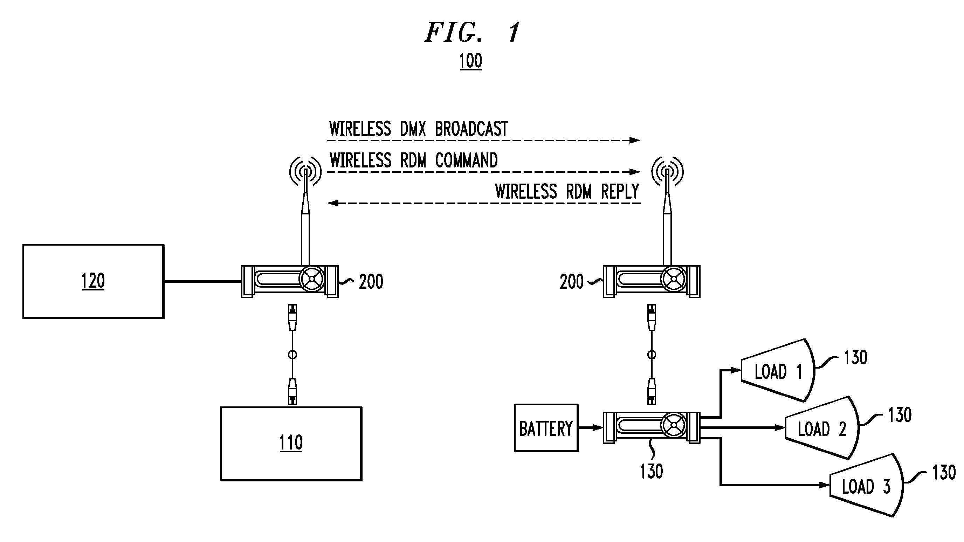

Figure 1 depicts a radio transceiver system in accordance with one embodiments of the present invention. The system 100 generally comprises a controller 110 (e.g., a DMX controller), at least a controlled device 130 (e.g., a dimmer, a fixture, or the like), a remote controller 120, and a plurality of radio transceivers 200 in accordance with embodiments of the present invention.

The controller 110 generally comprises a specialized or general-purpose computer executing a predefined or interactive program capable of providing instructions to operate and/ or control the controlled devices 130. The controller 110 may provide such instructions in accordance with any format or protocol suitable for embodiments of the present invention.

In many embodiments, the communication format utilized by the controller 110 is at least one of several entertainment industry-standard control protocols. For example, in one embodiment, the controller 110 provides instructions in the DMX512 control protocol developed by the U.S. Institute for Theater Technology, Inc. (USITT) Engineering Commission and adopted by the Entertainment Services and Technology Association (ESTA). Each control protocol utilized by embodiments of the present invention may comprise a plurality of independent data/ command channels (e.g., 512 or more channels), where channel corresponds to a specific parameter of a particular controlled device 130, as discussed below in greater detail.

A controlled device 130 may be any controllable device utilized in a standard entertainment application, or controllable by a radio transceiver system, suitable for embodiments of the present invention. In many embodiments, the controlled device 130 comprises a fixture, such as a luminaire, dimmer, stepper motor, fog/ smoke generator, light-emitting diode (LED) device, and DMX-controlled device, and the like.

The controlled device 130 may be controlled using any communication format or protocol suitable for embodiments of the present invention. In one embodiment, the controlled device 130 may be controlled using the DMX512 control protocol. In another embodiment, the controlled device 130 may be controlled using a Remote Device Management (RDM) protocol or an Advanced Control Network (ACN) protocol, both developed by the ESTA, or any additional entertainment Ethernet protocol suitable for embodiments of the present invention.

The controlled device 130 generally comprises a plurality of controllable parameters, which may vary depending on type of device. Exemplary controllable parameters may include: setting of a dimmer, position of a stepper motor, angle of projection of a luminaire, and the like.

A remote controller 120 is generally a control device acting as an RDM manager of RDM data signals transmitted and received within the system. The remote controller 120 may comprise a portable or handheld computer adapted for in-situ operation by service personnel installing, operating and/or monitoring the controlled devices 130. In operation, the remote controller 120 allows remote controllability, configurability and addressability of each controlled device 130, or radio transceiver 200 utilized in the system 100.

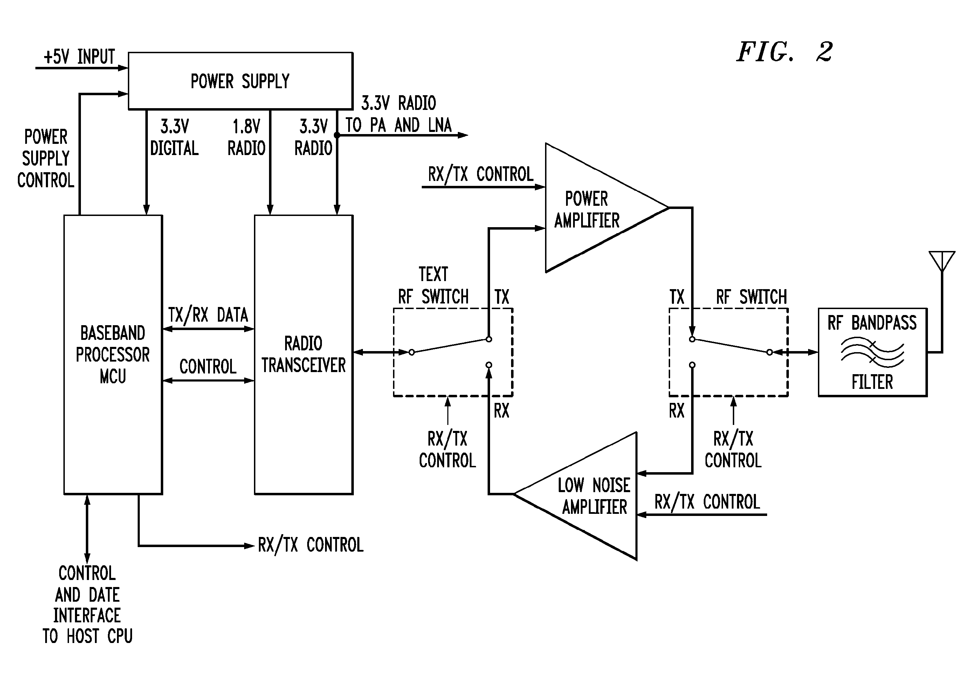

The structure of a radio transceiver 200 may be described with respect to Figure 2. Figure 2 depicts a block diagram of a radio transceiver in accordance with one embodiment of the present invention. A radio transceiver 200 generally comprises a baseband CPU 210, an RF transceiver 220, a radio amplifier 230, and an antenna 240, and optionally, a power source 260.

The baseband CPU 210 comprises a processing means, such as a central processing unit, for processing data from a control system (e.g., the controller 110, the remote controller 120, and the like) via an interface 250, and transmitting and receiving data with the RF transceiver 220. In many embodiments, the baseband CPU 210 comprises a microcontroller having sufficient speed and functionality to meet the demands of buffering, processing, and transferring data at a relatively high continuous rate, as required by embodiments of the present invention. The baseband CPU 210 may also comprise direct memory access (DMA) to allow transfer of blocks of data without over-utilizing the processor. In one embodiment, the baseband CPU 210 comprises a microcontroller, commercially available under the product name AT91SAM7S64, by Atmel Corporation, a Delaware corporation, with a headquarters in San Jose, California.

The interface 250 comprises any number of ports (not shown) for connecting to any number of inputs from the control system. In many embodiments, the ports comprise serial ports, USB ports, or the like, capable of transmitting and receiving transmit data (TxD), receive data (RxD), request to send (RTS), and clear to send (CTS) signals. In one embodiment, the ports comprise a universal asynchronous receiver/transmitter (UART) type connection having at least 40-pin connectors.

The RF transceiver 220 generally comprises a single chip radio integrated circuit (IC) suitable for performing the necessary functions, as required by embodiments of the present invention. The RF transceiver 220 comprises at least one of a half duplex or full duplex transceiver. In one embodiment, the RF transceiver 220 comprises a half duplex transceiver commercially available under the product name CC2400, by Texas Instruments, Inc., a Delaware corporation, with a headquarters in Dallas, Texas.

The RF transceiver 220 generally has a transmitting power between about .01mW and about 400mW, as measured by the FCC pre-antenna standards, and in one embodiment has a transmitting power of about 1mW. Optionally, the radio transceiver 200 may comprise a power amplifier (PA) to increase the RF transceiver 220 transmit power where necessary. In one embodiment, the radio transceiver comprises a power amplifier capable of increasing the RF transceiver 220 transmit power to at least about 1.0W. Similarly, the radio transceiver 200 may optionally comprise a low noise amplifier (LNA) to accommodate the sensitivity of the reception of the RF transceiver 220.

In certain embodiments, where both a PA and a LNA are utilized, the radio transceiver 200 may comprise two RF switches to separate the TxD signals and RxD signals. Furthermore, the radio transceiver 200 may additionally comprise a bandpass filter for reducing out-of-band spurious emissions and out-of-band interference for the RF transceiver 220.

The antenna 240 generally comprises a standard omnidirectional antenna for use in data communication applications. In several embodiments, the antenna 240 comprises a board-edge mounted coaxial or MMCX type connector. Exemplary commercially available antennas for use with embodiments of the present invention include model numbers S151AH-2450S and S141AH-2450, from Nearson Enterprise Corporation, of Taipei, Taiwan, and model number WCP2400-MMCX4, from Laird Technologies (formally Centurion Wireless Technologies), with corporate offices in London, England.

Typically, at least a pair of radio transceivers 200 are utilized in a radio transceiver system in accordance with embodiments of the present invention. In this regard, as is understood by embodiments of the present invention, a first radio transceiver primarily dedicated to transmitting the data from a control system (e.g., a controller 110, etc.) to a receiving device, may be termed "transmitter" or "server." Conversely, a second radio transceiver primarily dedicated to receiving data from a first radio transceiver may be termed a "receiver" or "client." In applications where a pair of radio transceivers 200 will solely be operating in either transmitter or receiver mode in accordance with the following disclosure, it is contemplated by embodiments to the present invention to provide each radio transceiver only with such hardware as each respective device would require to operate in such dedicated manner.

Transmission Modes

In operation, the radio transceiver 200 can operate in a plurality of modes. Generally, in each mode involving transmission of data, the radio transceiver 200 utilizes a Frequency Hopping Spread Spectrum (FHSS) broadcast. As is generally understood with FHSS technology, the FHSS broadcast format is a highly reliable and robust radio broadcasting technology utilizing an entire broadcast spectrum by rapidly hopping from channel to channel and broadcasting briefly on each one. The order that the radio follows to hop from channel to channel is called the "hopping pattern," and transmitters and associated receivers must be synchronized on the same hopping pattern in order to communicate.

While embodiments of the present invention may generally broadcast data utilizing FHSS broadcast technology, in one embodiment, the radio transceiver 200 utilizes an Adaptive Frequency Hopping Spread Spectrum (AFHSS) broadcast. Such broadcasting, in accordance with embodiments of the present invention, generally occurs in the unlicensed 2.4 GHz Industrial Scientific and Medical (ISM) radio band.

In many embodiments, the radio transceiver 200 can operate in at least four modes, including: a broadcast mode, half-duplex mode, configuration mode (i.e., testing mode), and sleep mode (i.e., standby). The modes may be selected automatically selected based on the data processes occurring in the system. In one embodiment, the mode may be selected via a switch or pin located on the radio transceiver 200. Each mode involving active data transmission is discussed below, in accordance with at least one exemplary embodiment. As is understood by those of ordinary skill in the art, general concepts and alternative embodiments to the exemplary embodiments discussed herein are fully supported by the following disclosure.

Broadcast Mode

A broadcast mode, in accordance with embodiments of the present invention, may be utilized for the transmission from a transmitter (server) or the reception at a receiver (client) of control data, formatted in an industry standard control protocol. In one embodiment, the control data is formatted using the DMX512 communication protocol.

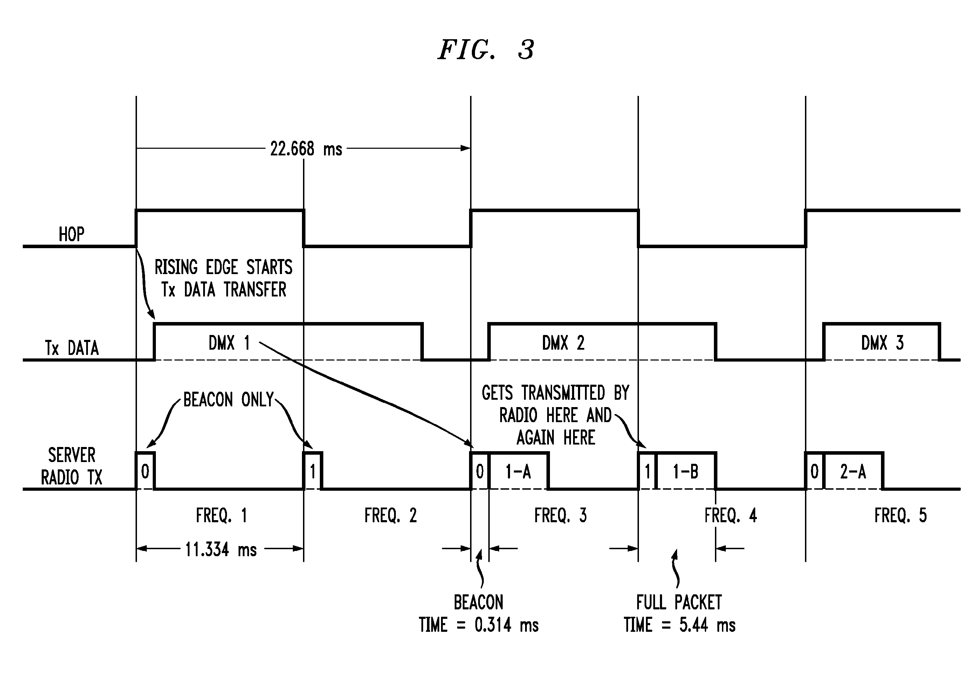

Figure 3 depicts a timing diagram at a transmitter, representing the data transmission through the transmitter, in accordance with one exemplary embodiment of the present invention.

In one embodiment, the transfer of data from a control system to the transmitter is synchronized by a "HOP" signal which originates from the transmitter. The data from each DMX512 packet is first transferred from the control system to the transmitter via the interface and associated ports. The DMX512 packet is then transmitted from the transmitter to the receiver, first on one frequency and then again on a next frequency in the hopping pattern. By retransmitting the same DMX512 packet on two separate frequencies (i.e., frequency diversity), the chance of error-free reception of each packet by the receiver.

Generally, the DMX512 data only has to be transferred from the control system to the transmitter once per packet, whereas the transmitter may store the packet for the second transmission on an internal memory. The transfer of data from the control system to the transmitter commences when the transmitter toggles the HOP signal from low to high. The HOP signal remains high until the beginning of the subsequent hop when the transmitter transmits the redundant packet.

The transmitter sets the timing of the hopping pattern by transmitting a beacon packet indicating the timing/expected transmission of a packet transmission. Even if the transmitter does not receive an expected amount of data from the control system, a beacon packet is still transmitted to the receiver. The beacon packet is generally a short data set, as it represents a header and enough data to indicate to the receiver that it is a beacon packet only. This allows the receiver to stay synchronized with the hopping pattern even where no DMX512 data packets are being transmitted.

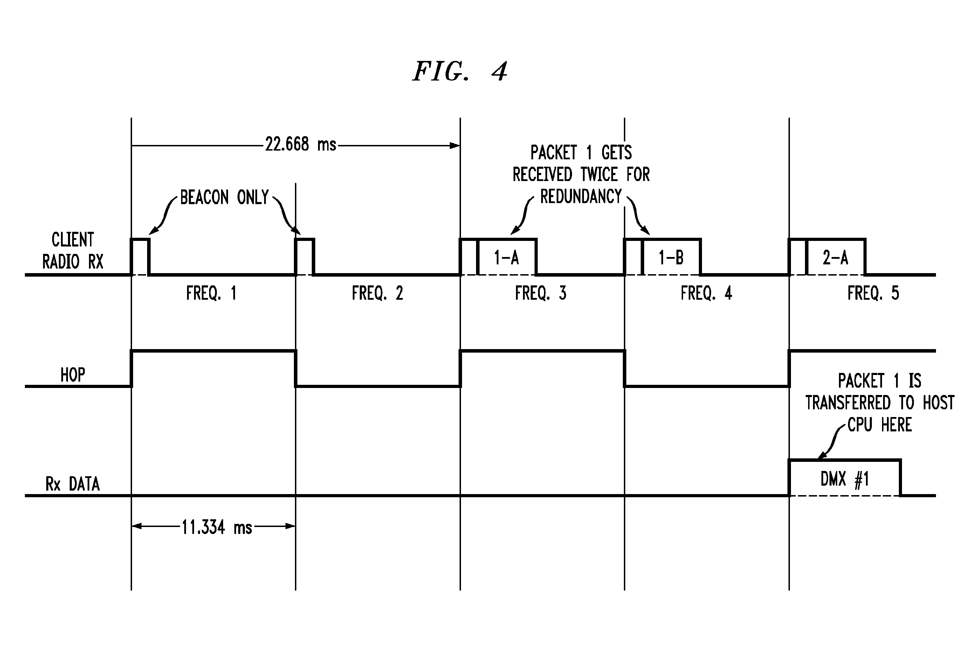

Figure 4 depicts a timing diagram at a receiver, representing the data transmission to a receiver from a transmitter, in accordance with one exemplary embodiment of the present invention.

In one embodiment, when a receiver is in broadcast mode, it may be receiving and hopping through a hopping pattern in time with the transmitter. When a receiver is receiving a signal from a transmitter, and is synchronized, it generates the "HOP" signal to indicate the timing hopping pattern. Similar to the timing at the transmitter, the HOP signal goes high at the beginning of every second hop. The toggling of the HOP signal will indicate the receiver is receiving a signal from the transmitter and is synchronized to it, even if there is no data being transmitted.

Generally, if data is being transmitted by the transmitter, the receiver will receive two packets of the same data each with a sequence number (0 or 1). The receiver may perform a cyclic redundancy check (CRC) on the first packet to determine if it is acceptable. If it is found unacceptable, the second packet is checked. If one or both of the packets have been received without error, then the errorless packet is allowed to be passed through. If both packets are in error, then the receiver does not transfer any data.

After the receiver has determined there is an errorless packet, it will start to transfer the received data packet immediately after the HOP signal goes high. If both packets were in error or if no data was received (i.e., only a beacon packet) then the HOP signal will still toggle but there will be no data transferred.

In one embodiment, the total average latency for transmission of a DMX512 packet is between about 40.0ms and about 60.0ms. This delay is reflective of a time period when the transmitter transfers a DMX packet to the receiver until the receiver transfers the same DMX packet to its baseband CPU.

Half-Duplex Mode

A half-duplex mode, in accordance with embodiments of the present invention, may be utilized where a transmitter is transmitting commands to and receiving replies from a receiver. For example, the half-duplex mode may be utilized when RDM commands are used in the system.

Generally, in the half-duplex mode, the transmitter first transmits data to a receiver, whereby the receiver may reply, if necessary. In contrast to the broadcast mode, where each packed it transmitted on two consecutive hops for redundancy, the half-duplex mode provides the transmitter only transmits each packet once, on the odd hop (i.e., hop 1). On the even hop (i.e., hop 0), the receiver may transmit a reply back to the transmitter.

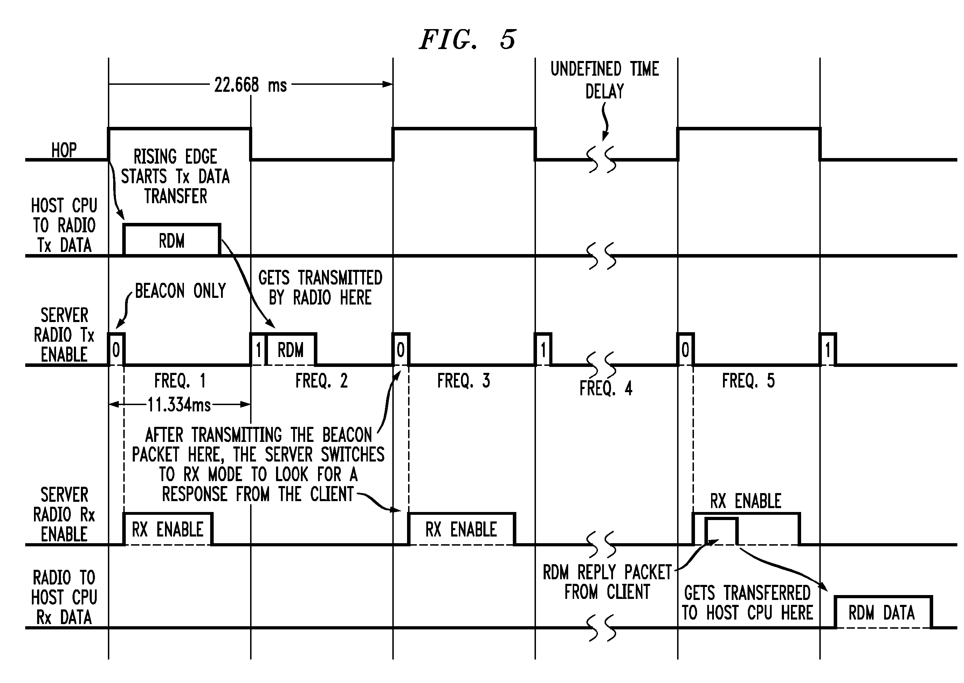

Figure 5 depicts a timing diagram at a transmitter, representing the data transmission through the transmitter, in accordance with one exemplary embodiment of the present invention. As shown in the Figure, when the transmitter is put into half-duplex mode, the timing of the hopping pattern is not substantially different from the broadcast mode. The transmitter will generally continue to transmit beacon packets every hop so the receiver can stay synchronized.

In the half-duplex mode, between the rising edge and the next falling edge of the HOP signal, the transmitter may expect a data packet from the control system. This data packet is generally expected with a particular number of bytes specific to the format and protocol of the data transmission (e.g., normally 257B for RDM protocol transmission). If the transmitter has not received a complete packet from the control system by the time of the next falling edge of HOP, it will transmit solely a beacon packet. If a complete data packet is received, it will be transmitted on the subsequent falling edge (hop "1"). Upon transmission of a data packet, the transmitter will await a reply from the receiver (although a reply is not always required or received). The reply, if any, will be transmitted from the receiver to the transmitter after the next beacon packet on hop "0".

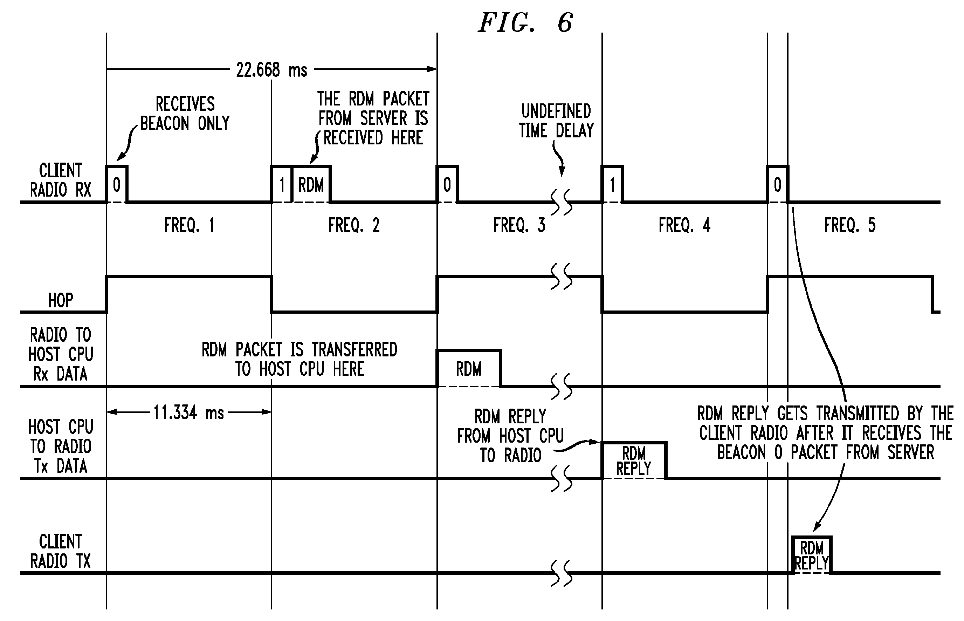

Figure 6 depicts a timing diagram at a receiver, representing the data transmission to a receiver from a transmitter, in accordance with one exemplary embodiment of the present invention.

The receiver may generally be in broadcast mode when it receives the packet from the transmitter because it will not know to change modes unless its own CPU provides such instructions. Thus, to change modes, the receiver will receive a packet of type "half-duplex command" on hop "1," and this data is transferred to the receiver CPU.

If the receiver CPU needs to send a reply back to the transmitter then it will switch the receiver into half-duplex mode and send data (e.g., RDM reply) to the transmitter after the appropriate falling edge of the HOP signal. A reply is transmitted by the receiver immediately after receiving the next beacon (hop "0") from the transmitter. The transmitter will be in half-duplex mode still if it is expecting a reply, will therefore be ready to receive any transmitted data.

Data Packet Structure and Timing

Data packets transmitted with the embodiments of the present invention will generally follow a specific format and timing structure. The structure will generally be the same whether the packet is transmitting DMX data, RDM data or some other data. The packet type and data length fields will vary accordingly and the length of the data packet may change as well.

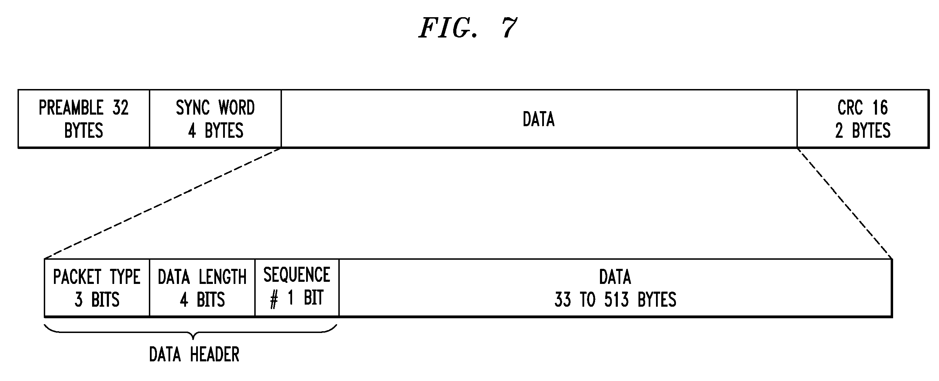

Figure 7 generally depicts the structure of a data packet, in accordance with embodiments of the present invention. A data packet generally comprises a preamble, sync word, data set, and CRC16. The preamble, sync word and CRC 16 are added automatically to each data packet transmitted by each radio transceiver. The preamble is to allow the receiver time to synchronize with an incoming packet. The sync word is to identify to the radio transceiver that the packet is intended for the correct system. The CRC16 value will be calculated automatically by the RF transceiver of each radio transceiver, and inserted at the end of the packet. The RF transceiver of the receiving device then calculates the CRC16 value on the received data and compares to the transmitted value. The baseband CPU of the receiving device will generally check if the CRC value is correct. Any errors found in the CRC16 value will prevent the packet from being passed on to the receiving devices' baseband CPU.

A data set generally comprises a data header and a data field. The data header comprises a packet type, a data length, and a sequence number. The data header bits are added by a radio transceiver's baseband CPU to add additional information about the type of packet, length of packet, and indication if the packet is on the odd hop or even hop. The data field, which carries the relative instructions between radio transceivers, ranges from 33 bytes to 513 bytes, in accordance with embodiments of the present invention.

Channelization and Frequency Hopping

In accordance with one exemplary embodiment of the present invention, the radio transceiver will generally operate in the 2.4 GHz ISM band and will use frequency hopping FSK modulation at an over-the-air data rate of about 1 Mbps. At this data rate the RF signal has a bandwidth of about 1.25 MHz and the channels will be spaced with the center frequencies about 2 MHz apart.

The 2.4 GHz band covers the range from about 2.40 to about 2.50, and more specifically between about 2.4000 to about 2.4835 GHz. However, leaving guard band at each edge of the band leaves room for 37 channels. Thus, in such an embodiment, the lowest channel is at about 2.406GHz and the highest is at about 2.476GHz.

In many embodiments, the radio transceiver has at least eight different hopping bands within this range that can be selected by the baseband CPU. Generally, there are at least four different bands to choose from, including: full-band, low-band, mid-band, and high-band. Each band may use even frequencies or odd frequencies. This scheme provides some flexibility for choosing different bands to operate simultaneously without interfering with each other. Furthermore, by providing such flexibility, the ability to select a sub-band to avoid other devices such as Wi-Fi.

Moreover, for each individual band, a number of different hopping sequences (or patterns) are available. For example, in accordance with embodiments of the present invention, 36 sequences are available for the full-bands, and 16 sequences are available for the sub-bands. Each respective sequence has low cross-correlation with every other sequence, thus minimizing the likelihood of interference between a plurality of radio transceivers operating simultaneously within different (or the same) systems. Such an ability to select limited bandwidth in a radio transceiver, to avoid interference from other devices operating in the vicinity, is incomparable in the entertainment industry, and provides a very valuable advantage.

During operation, in one embodiment, a transmitter will transmit DMX packets twice on two different channels for redundancy. If the first DMX packet transmission collides with an interfering signal, the receiver may not receive the packet, or at least not an error-free packet. However, the receiver will likely recover the DMX packet on the next hop (i.e., the second transmission), whereas it will be on a different channel.

Pseudorandom Hopping Sequence Generation

In one exemplary embodiment of the present invention, the hopping sequences utilized by the radio transceiver is calculated mathematically using hyperbolic codes and they are stored as look-up tables in the firmware. In one embodiment, the formula used to calculate them is:

$$y(k) = a/k *(mod(p))$$

Where: p is a prime number; a is the sequence number; k is the position in the sequence 1,2, .....p-1; and where the factor p must be a prime number and the resulting sequence has p-1 numbers in it.

Thus, for the full-band hopping sequences, p = 37 was used to generate 36 different sequences each with 36 channels. For the sub-bands, p = 17 was used to generate 16 different sequences each with 16 channels. Since only 15 channels were required for the sub-bands, channel 16 of each sequence may be removed.

Equal Hopping Frequency Use

One method used to determine the specific time to transmit on each channel utilizes a crystal-controlled timer with a controlled period (e.g., 11.334 ms), and a pseudorandom frequency hopping sequence, as discussed above. To implement this method, each of the three different transmission modes (i.e., transmitter broadcast, transmitter half-duplex, and receiver half-duplex) are individually addressed.

A transmitter in broadcast mode begins transmitting beacon packets automatically after coming out of a reset stage. If, for example, DMX data is being transferred to a receiver, then that data will be transmitted as well as the beacon header. The transmitter starts its transmission on the first channel of the selected sequence and transmits a packet. When the baseband CPU is interrupted by the timer, the next channel in the sequence is chosen and the next packet is transmitted on that channel. The process continues until the end of the sequence is reached and then it continues from the beginning of the sequence again. This process may be cyclical and will continue until the radio is either powered off, put into a sleep mode or reset.

A transmitter in half-duplex mode operates almost the same as in broadcast mode. One primary difference is that on every alternate hop the transmitter only transmits a beacon packet, and then immediately awaits a reply signal from the receiver for the remaining time on that frequency. However, the timing of the hopping sequence is exactly the same as in broadcast mode.

The receiver in half-duplex mode normally remains in broadcast mode, i.e., receives packets from a transmitter, until needed, at which time it can transmit reply data packets back to the transmitter. The receiver is synchronized with the beacon packets, and will only transmit a data packet back to the transmitter immediately after receiving the beacon packet on a second hop. However, the receiver half-duplex mode will generally only be used when the receiver must respond to a request from the transmitter. Therefore, the transmissions from a receiver will be timed randomly, and will happen on the channel that the system is hopping to at the time.

Receiver Hopping Capability

A receiver that is meant to be used with a specific transmitter will usually be set to use the same hopping band and hopping sequence as the transmitter. It will also generally have a crystal controlled timer with the same time period. However, when the receiver is first powered on, it will not be synchronized with the transmitter. Generally, the receiver initially starts up in an acquisition phase until it receives a valid server signal and synchronizes with it.

In accordance with an exemplary embodiment, a receiver in broadcast mode or half-duplex mode will start in the acquisition phase after coming out of a reset. In acquisition phase, the receiver will enable its RF transceiver and start searching for a valid packet from a transmitter on the first channel in a programmed hopping sequence. A valid packet will be identified with the correct sync word at the beginning of the packet to indicate that the two radio transceivers are intended to be on the same system. If the receiver does not receive a valid packet on the first channel, it hops to a another channel to look for a valid packet. During the acquisition phase, the receiver does not utilize a normal hopping sequence, but rather a modified hopping sequence that results in a quicker acquisition of a valid packet. The hopping rate during acquisition is the same as the transmitter uses, within the tolerances of the timer clock.

The acquisition hopping sequence may be generated by adding an offset to the normal sequence that increments with each hop and also alternates its sign between positive and negative. i.e.:

normal index sequence = 0,1, 2, ... 35

offset = 0,1, -1, 2, -2, ... -17

The two sequences are added to get:

acquisition sequence = 0, 2, 1, 5, 2 ...

While this acquisition hopping sequence provides the index for the pseudorandom hopping sequence, it is not the pseudorandom sequence itself. Rather, the index is used with the selected hopping sequence to generate the modified hopping sequence for acquisition.

Once the receiver identifies a valid packet from the transmitter, it switches to the normal hopping sequence and synchronizes its timing to the beacon packets. After a receiver has acquired the server beacon packets, it will track the hop timing of the transmitter by constantly measuring the time between packets from the transmitter and adjusting its hop timing to match.

If a receiver loses synchronization with its transmitter, it will attempt to resynchronize by one of the following: (1) if no beacon packet is received for 5 hops, it hops to the next channel in the sequence and then waits for 5 hop times looking for a valid beacon packet; (2) if no beacon packet is received in step 1, it starts over at the beginning with the acquisition phase as described above; or (3) if step 2, is unsuccessful and the receiver has missed a count of 240 beacons, then the receiver resets the RF transceiver to an idle state, restarts the receiver and begins the acquisition phase again.

Additional Features

Additional output features of the radio transceiver, in accordance with embodiments of the present invention, include selectable bandwidth hopping (i.e., Full, Limited or Limited Burst Output). In Full Bandwidth Hopping, the radio transceiver will continuously hop across a full ISM band (e.g., 2.4 GHz) spectrum, providing a substantially interference-free delivery mode.

In Limited Bandwidth Hopping, the radio transceiver is assigned to one of three sub-bands in the full ISM band spectrum. Each sub-band comprises about two-fifths of the full band, with low end, center, and high-end positions. By selecting a sub-band, the radio transceiver may be set to broadcast in a different position of the spectrum than other equipment being used in the area, to minimize or eliminate interference with WiFi channels. In one embodiment, the Limited Bandwidth Hopping mode can be utilized when the radio transceiver is broadcasting at less than about 125 mW output power.

In Limited Burst Output, the number of possible transmission channels is reduced, as well as the level of output power of the radio transceiver. In this mode, any contiguous group of 32 or more protocol values (e.g., DMX values) may be selected, in multiples of 32 values, and any starting address may be utilized.

Additionally, embodiments of the present invention may provide adjustable output power. In one embodiment, the output power may be adjustable between about 5mW and about 200mW. In another embodiment, the output power may be adjustable between about 10mW and about 125mW.

While the foregoing is directed to embodiments of the present invention, other and further embodiments of the invention may be devised without departing from the basic scope thereof. For example, embodiments of the present invention are fully scalable to as many transmitters or receivers as may be necessary in a system.

**Claims**

1.  A radio transceiver system (100) comprising:

    a control system (110);
    a first radio transceiver (200) for transmitting control data formatted in at least an industry-standard control protocol from the control system (110) to at least a second radio transceiver (200);

a second radio transceiver (200) for receiving control data from the first radio transceiver (200) and communicating the same to at least a load;

wherein
the load comprises at least one of a luminaire, dimmer, stepper motor, fog generator, smoke generator, light-emitting diode (LED) device or other DMX-controlled device; wherein
the control data is transmitted from the first radio transceiver (200) to the second radio transceiver (200) utilizing a frequency hopping spread spectrum broadcast; wherein
the industry-standard control protocol comprises at least one from the group consisting of DMX512, RDM and ACN; wherein
the frequency hopping spread spectrum broadcast comprises a duplicate transmission of a first data packet on two unequal frequencies; **characterized in that**

the first radio transceiver (200) sets the timing of the hopping pattern by transmitting a beacon packet indicating the timing/expected transmission of a packet transmission]; wherein
even if the first radio transceiver (200) does not receive an expected amount of data from the control system (110), a beacon packet is still transmitted to the second radio transceiver (200).

2. The radio transceiver system of claim 1, wherein frequency hopping spread spectrum broadcast is an adaptive frequency hopping spread spectrum broadcast.

3. The radio transceiver system of claim 1, wherein the frequency hopping spread spectrum broadcast occurs across a sub-band of the 2.4 GHz, representing about two fifths of the 2.4 GHz spectrum.

4. A method of transmitting data within an entertainment control system (100) comprising:

initiating a hopping signal from a first transceiver having a constant timing period;
transmitting control data from a control system to the first transceiver (200) upon initiation of the hopping signal;
transmitting the control data from the first transceiver (200) to a second transceiver (200) on a first frequency; and
retransmitting the control data from the first transceiver (200) to the second transceiver (200) on a second frequency, **characterized in that** the control data is formatted in at least an industry-standard control protocol comprises at least one from the group consisting of DMX512, RDM and ACN; **characterized in that**

the first radio transceiver (200) sets the timing of the hopping pattern by transmitting a beacon packet indicating the timing/expected transmission of a packet transmission; wherein
even if the first radio transceiver (200) does not receive an expected amount of data from the control system (110), a beacon packet is still transmitted to the second radio transceiver (200).

5. The method of transmitting data within an entertainment control system of claim 4, wherein the transmitting of the control data and the retransmitting of the control data occur within a single timing period of the hopping signal.

6. The method of transmitting data within an entertainment control system of claim 4, wherein the first frequency and the second frequency are sequential frequencies in a frequency hopping spread spectrum broadcast.

7. The method of transmitting data within an entertainment control system of claim 6, wherein the frequency hopping spread spectrum broadcast occurs across a full 2.4 GHz spectrum.

8. The method of transmitting data within an entertainment control system of claim 6, wherein the frequency hopping spread spectrum broadcast occurs across a sub-band of the 2.4 GHz, representing about two-fifths of the 2.4 GHz spectrum.

9. The method of transmitting data within an entertainment control system of claim 6, wherein a hopping sequence for the frequency hopping spread spectrum broadcast is calculated using a function of at least a sequence number and a position in a particular sequence.

10. The method of transmitting data within an entertainment control system of claim 4, wherein the control data is between about 39 and about 552 bytes.

11. The method of transmitting data within an entertainment control system of claim 4, wherein the constant timing period of the hopping signal is between about 22.0 mS. and about 23.0 mS.

**Patentansprüche**

1. Funk-Sende/Empfangssystem (100), das Folgendes umfasst:

ein Steuersystem (110);
eine erste Funk-Sende/Empfangseinrichtung (200) zum Übertragen von Steuerdaten, die mindestens in einem Industriestandard-Steuerprotokoll formatiert sind, vom Steuersystem (110) zu mindestens einer zweiten Funk-Sende/Empfangseinrichtung (200);

eine zweite Funk-Sende/Empfangseinrichtung (200) zum Empfangen der Steuerdaten von der ersten Funk-Sende/Empfangseinrichtung (200) und zum Kommunizieren derselben an mindestens eine Last;

wobei

die Last einen Beleuchtungskörper und/oder einen Dimmer und/oder einen Schrittmotor und/oder einen Nebelgenerator und/oder einen Rauchgenerator und/oder eine Leuchtdiodenvorrichtung (LED-Vorrichtung) und/oder eine andere DMX-gesteuerte Vorrichtung umfasst; wobei

die Steuerdaten von der ersten Funk-Sende/Empfangseinrichtung (200) unter Nutzung eines Frequenzsprung-Spreizspektrum-Rundsendens zu der zweiten Funk-Sende/Empfangseinrichtung (200) übertragen werden; wobei

das Industriestandard-Steuerprotokoll mindestens eines aus der Gruppe, die aus DMX512, RDM und ACN besteht, umfasst, wobei

das Frequenzsprung-Spreizspektrum-Rundsenden eine Duplikatübertragung eines ersten Datenpakets auf zwei ungleichen Frequenzen umfasst;

**dadurch gekennzeichnet, dass**

die erste Funk-Sende/Empfangseinrichtung (200) die Zeitsteuerung des Sprungmusters durch Übertragen eines Bakenpakets einstellt, das die Zeitsteuerung/die erwartete Übertragung einer Paketübertragung angibt; wobei selbst dann, wenn die erste Funk-Sende/Empfangseinrichtung (200) eine erwartete Datenmenge vom Steuersystem (110) nicht empfängt, nach wie vor ein Bakenpaket an die zweite Funk-Sende/Empfangseinrichtung (200) übertragen wird.

2. Funk-Sende/Empfangssystem nach Anspruch 1, wobei das Frequenzsprung-Spreizspektrum-Rundsenden ein adaptives Frequenzsprung-Spreizspektrum-Rundsenden ist.

3. Funk-Sende/Empfangssystem nach Anspruch 1, wobei das Frequenzsprung-Spreizspektrum-Rundsenden über ein Unterband von 2,4 GHz erfolgt, das ungefähr zwei Fünftel des 2,4 GHz-Spektrums darstellt.

4. Verfahren zur Datenübertragung in einem Unterhaltungssteuersystem (100), das Folgendes umfasst:

Auslösen eines Sprungsignals von einer ersten Sende/Empfangseinrichtung, das eine konstante Zeitsteuerungsperiode aufweist;

Übertragen der Steuerdaten von einem Steuersystem an die erste Sende/Empfangseinrichtung (200) nach dem Auslösen des Sprungsignals;

Übertragen der Steuerdaten von der ersten Sende/Empfangseinrichtung (200) an eine zweite Sende/Empfangseinrichtung (200) auf einer ersten Frequenz; und

erneutes Übertragen der Steuerdaten von der ersten Sende/Empfangseinrichtung (200) an die zweite Sende/Empfangseinrichtung (200) auf einer zweiten Frequenz, **dadurch gekennzeichnet, dass** die Steuerdaten mindestens in einem Industriestandard-Steuerprotokoll formatiert sind, das mindestens eines aus der Gruppe, die aus DMX512, RDM und ACN besteht, umfasst; **dadurch gekennzeichnet, dass**

die erste Funk-Sende/Empfangseinrichtung (200) die Zeitsteuerung des Sprungmusters durch Übertragen eines Bakenpakets einstellt, das die Zeitsteuerung/die erwartete Übertragung einer Paketübertragung angibt; wobei selbst dann, wenn die erste Funk-Sende/Empfangseinrichtung (200) eine erwartete Datenmenge vom Steuersystem (110) nicht empfängt, nach wie vor ein Bakenpaket an die zweite Funk-Sende/Empfangseinrichtung (200) übertragen wird.

5. Verfahren zur Datenübertragung in einem Unterhaltungssteuersystem nach Anspruch 4, wobei das Übertragen der Steuerdaten und das erneute Übertragen der Steuerdaten in einer einzigen Zeitsteuerungsperiode des Sprungsignals erfolgen.

6. Verfahren zur Datenübertragung in einem Unterhaltungssteuersystem nach Anspruch 4, wobei die erste Frequenz und die zweite Frequenz aufeinanderfolgende Frequenzen in einem Frequenzsprung-Spreizspektrum-Rundsenden sind.

7. Verfahren zur Datenübertragung in einem Unterhaltungssteuersystem nach Anspruch 6, wobei das Frequenzsprung-Spreizspektrum-Rundsenden über ein vollständiges 2,4 GHz-Spektrum erfolgt.

8. Verfahren zur Datenübertragung in einem Unterhaltungssteuersystem nach Anspruch 6, wobei das Frequenzsprung-Spreizspektrum-Rundsenden über ein Unterband von 2,4 GHz erfolgt, das ungefähr zwei Fünftel des 2,4 GHz-Spektrums darstellt.

9. Verfahren zur Datenübertragung in einem Unterhaltungssteuersystem nach Anspruch 6, wobei eine Sprungfolge des Frequenzsprung-Spreizspektrum-Rundsendens unter Verwendung einer Funktion von mindestens einer Folgenummer und einer Position in einer bestimmten Folge berechnet wird.

**10.** Verfahren zur Datenübertragung in einem Unterhaltungssteuersystem nach Anspruch 4, wobei die Steuerdaten im Bereich von ungefähr 39 Bytes bis ungefähr 552 Bytes liegen.

**11.** Verfahren zur Datenübertragung in einem Unterhaltungssteuersystem nach Anspruch 4, wobei die konstante Zeitsteuerungsperiode des Sprungsignals im Bereich von ungefähr 22,0 ms bis ungefähr 23,0 ms liegt.

**Revendications**

**1.** Système d'émetteur-récepteur radio (100) comprenant :

un système de commande (110) ;
un premier émetteur-récepteur radio (200) pour transmettre des données de commande formatées dans au moins un protocole de commande standard de l'industrie depuis le système de commande (110) à au moins un second émetteur-récepteur radio (200) ;
un second émetteur-récepteur radio (200) pour recevoir des données de commande provenant du premier émetteur-récepteur radio (200) et communiquant celles-ci à au moins une charge ; où

la charge comprend au moins un élément parmi : un luminaire, un gradateur, un moteur pas-à-pas, un générateur de brouillard, un dispositif à diode électroluminescente (LED) ou un autre dispositif contrôlé par DMX ; où
les données de commande sont transmises du premier émetteur-récepteur radio (200) au second émetteur-récepteur radio (200) au moyen d'une diffusion à spectre étalé à sauts de fréquence ; où
le protocole de commande standard de l'industrie comprend au moins un protocole du groupe constitué de DMX512, RDM et ACN ; où
la diffusion à spectre étalé à sauts de fréquence comprend une transmission en double d'un premier paquet de données sur deux fréquences différentes ; **caractérisé en ce que**
le premier émetteur-récepteur radio (200) définit la temporisation du motif des sauts en transmettant un paquet de balise indiquant la temporisation/la transmission attendue d'une transmission de paquet ; où même si le premier émetteur-récepteur radio (200) ne reçoit pas une quantité attendue de données du système de commande (110), un paquet de balise est toujours transmis au second émetteur-récepteur radio (200).

**2.** Système d'émetteur-récepteur radio selon la revendication 1, dans lequel la diffusion à spectre étalé à sauts de fréquence est une diffusion à spectre étalé à sauts de fréquence adaptative.

**3.** Système d'émetteur-récepteur radio selon la revendication 1, dans lequel la diffusion à spectre étalé à sauts de fréquence se produit dans une sous-bande de 2,4 GHz, ce qui représente environ deux cinquièmes du spectre 2,4 GHz.

**4.** Procédé de transmission de données dans un système de commande de divertissement (100) comprenant les étapes suivantes :

initier un signal de saut depuis un émetteur-récepteur ayant une période de temps constante ;
transmettre des données de commande d'un système de commande au premier émetteur-récepteur (200) lors de l'initiation du signal de saut ;
transmettre les données de commande du premier émetteur-récepteur (200) à un second émetteur-récepteur (200) sur une première fréquence ; et
retransmettre les données de commande du premier émetteur-récepteur (200) au second émetteur-récepteur (200) sur une seconde fréquence, **caractérisé en ce que** les données de commande sont formatées dans au moins un protocole de commande standard de l'industrie qui comprend au moins un protocole du groupe constitué de DMX512, RDM et ACN ; **caractérisé en ce que**

le premier émetteur-récepteur radio (200) définit la temporisation du motif des sauts en transmettant un paquet de balise indiquant la temporisation/la transmission attendue d'une transmission de paquet ; où même si le premier émetteur-récepteur radio (200) ne reçoit pas une quantité attendue de données du système de commande (110), un paquet de balise est toujours transmis au second émetteur-récepteur radio (200).

**5.** Procédé de transmission de données dans un système de commande de divertissement de la revendication 4, dans lequel la transmission des données de commande et la retransmission des données de commande se produisent au cours d'une seule temporisation du signal de saut.

**6.** Procédé de transmission de données dans un système de commande de divertissement de la revendication 4, dans lequel la première fréquence et la seconde fréquence sont des fréquences séquentielles dans une diffusion à spectre étalé à sauts de fréquence.

7. Procédé de transmission de données dans un système de commande de divertissement de la revendication 6, dans lequel la diffusion à spectre étalé à sauts de fréquence se produit dans un spectre complet de 2,4 GHz.

8. Procédé de transmission de données dans un système de commande de divertissement de la revendication 6, dans lequel la diffusion à spectre étalé à sauts de fréquence se produit dans une sous-bande de 2,4 GHz, ce qui représente environ deux cinquièmes du spectre 2,4 GHz.

9. Procédé de transmission de données dans un système de commande de divertissement de la revendication 6, dans lequel une séquence de saut pour la diffusion à spectre étalé à sauts de fréquence est calculée au moyen d'une fonction d'au moins un numéro de séquence et d'une position dans une séquence particulière.

10. Procédé de transmission de données dans un système de commande de divertissement selon la revendication 4, dans lequel les données de commande font entre environ 39 et environ 552 octets.

11. Procédé de transmission de données dans un système de commande de divertissement selon la revendication 4, dans lequel la temporisation constante du signal de saut est comprise entre environ 22,0 ms et environ 23,0 ms.

*FIG.* *1*

100

FIG. 2

*FIG. 3*

EP 2 103 013 B1

*FIG. 4*

PACKET 1 GETS RECEIVED TWICE FOR REDUNDANCY

22.668 ms

BEACON ONLY

CLIENT RADIO RX

1-A 1-B 2-A

FREQ. 1 FREQ. 2 FREQ. 3 FREQ. 4 FREQ. 5

HOP

PACKET 1 IS TRANSFERRED TO HOST CPU HERE

Rx DATA

DMX #1

11.334 ms

EP 2 103 013 B1

FIG. 5

FIG. 6

*FIG. 7*

| PREAMBLE 32 BYTES | SYNC WORD 4 BYTES | DATA | CRC 16 2 BYTES |

| PACKET TYPE 3 BITS | DATA LENGTH 4 BITS | SEQUENCE # 1 BIT | DATA 33 TO 513 BYTES |

DATA HEADER

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006012239 A2
- EP 1187414 A1
- US 20040085941 A1
- US 20010050943 A1
- US 11109013 B
- US 20050286646 A